# EUROPEAN PATENT SPECIFICATION

(11) **EP 4 254 640 B1**
(45) Date of publication and mention of the grant of the patent: **19.02.2025**
(21) Application number: 22210760.9
(22) Date of filing: 01.12.2022
(51) Int. Cl.: H01M 50/531

(54) **BATTERY PACK**
BATTERIEPACK
BLOC-BATTERIE

(30) Priority: 17.01.2022 JP 2022005203
(43) Date of publication of application: 04.10.2023
(73) Proprietor: Suzuki Motor Corporation, Hamamatsu-shi, Shizuoka 432-8611 (JP)
(72) Inventor: KAMONO, Tsugutaka, HAMAMATSU-SHI, SHIZUOKA-KEN, 432-8611 (JP)
(74) Representative: Plasseraud IP

(56) References cited:
- WO-A1-2021/153191
- CN-A- 103 531 836
- JP-A- 2019 040 700
- JP-A- 2019 139 924
- US-B2- 9 310 348

## Description

### [Technical Field]

This invention relates to a battery pack.

### [Background of the Invention]

JP 2019-40700 A describes a battery pack including a housing which accommodates a battery and a control unit and a submersion sensor which detects a liquid fluid. The housing of the battery pack described in JP 2019-40700 A includes a bottom wall and an annular side wall erected from the bottom wall, an accommodation space is formed by the bottom wall and the side wall so that a fluid can flow thereinto, the battery and the control unit are provided in the accommodation space, and at least a part of the submersion sensor detecting the submersion of the battery pack is disposed outside the accommodation space. In this way, in the battery pack described in JP 2019-40700 A, the submersion sensor is provided outside the battery pack. CN 103531836A discloses a battery capable of detecting immersion and suspending charging and discharging.

### [Prior Art]

### [Patent Literature]

[Patent Literature 1] JP 2019-40700 A

### [Summary of the Invention]

### [Problem to be solved by the Invention]

However, in the technique described in JP 2019-40700 A, since the submersion sensor is provided outside the battery pack, an installation space for providing the submersion sensor outside the battery pack is required. As a result, a problem arises in that the configuration becomes complicated.

This invention has been made in view of the above-described problems and an object of this invention is to provide a battery pack capable of detecting submersion of a battery case with a simple configuration.

### [Means to solve the problem]

According to aspects of this invention, which is given by the claims, there is provided a battery pack including:
a battery; and a battery case accommodating the battery, in which the battery case includes a first conductive portion and a second conductive portion formed of a conductive material and exposed to an outer surface, in which an insulating member insulating the first conductive portion and the second conductive portion is provided between the first conductive portion and the second conductive portion, and in which a first contact electrically connected to the first conductive portion, a second contact electrically connected to the second conductive portion, and a submersion detection circuit detecting an electrical connection between the first contact and the second contact caused by the submersion of the first conductive portion and the second conductive portion are provided inside the battery case.

### [Effect of the Invention]

In this way, according to this invention, it is possible to provide a battery pack capable of detecting submersion of a battery case with a simple configuration.

### [Brief description of figures]

[Fig. 1] Fig. 1 is a side view of a battery pack according to a first embodiment of this invention.
[Fig. 2] Fig. 2 is a side view of a battery pack according to a second embodiment of this invention.
[Fig. 3] Fig. 3 is a front view of the battery pack according to the second embodiment of this invention.

### [Embodiment(s) of the Invention]

A battery pack according to embodiments of this invention includes: a battery; and a battery case accommodating the battery, in which the battery case includes a first conductive portion and a second conductive portion formed of a conductive material and exposed to an outer surface, in which an insulating member insulating the first conductive portion and the second conductive portion is provided between the first conductive portion and the second conductive portion, and in which a first contact electrically connected to the first conductive portion, a second contact electrically connected to the second conductive portion, and a submersion detection circuit detecting an electrical connection between the first contact and the second contact caused by the submersion of the first conductive portion and the second conductive portion are provided inside the battery case. Accordingly, the battery pack according to embodiments of this invention can detect the submersion of the battery case with a simple configuration.

### [Embodiments]

### [First embodiment]

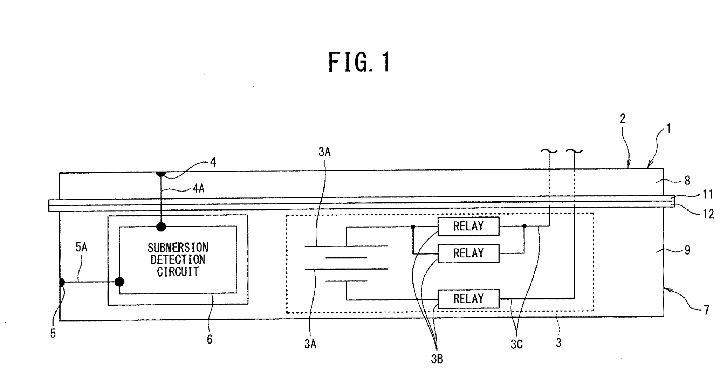

A battery pack of a vehicle according to a first embodiment of this invention will be described with reference to the drawings. Fig. 1 is a view showing the battery pack according to the first embodiment of this invention.

In Fig. 1, a battery pack 1 includes a high-voltage battery 3 and a battery case 2 accommodating the high-voltage battery 3. The battery pack 1 is configured as an in-vehicle battery pack mounted in a vehicle such as an automobile (not shown), and supplies electric power to a driving motor provided in the vehicle via an inverter or the like.

The high-voltage battery 3 includes a plurality of battery cells 3A, a relay 3B which switches the connection of the plurality of battery cells 3A, and a lead wire 3C which connects the battery cell 3A and the relay 3B and is drawn out of the battery case 2. The high-voltage battery 3 generates a high voltage by connecting the plurality of battery cells 3A in series with the lead wire 3C. The high-voltage battery 3 constitutes the battery of this invention.

The battery case 2 includes an upper casing 8 and a lower casing 9 which are joined together to form a sealed space that accommodates the high-voltage battery 3. The upper casing 8 and the lower casing 9 constitute a casing body 7 which accommodates the high-voltage battery 3. The upper casing 8 constitutes the first casing and the first conductive portion of this invention and the lower casing 9 constitutes the second casing and the second conductive portion of this invention.

The upper casing 8 and the lower casing 9 are formed of a conductive material and are exposed to the outer surface. As the conductive material, for example, metal such as iron can be used. Additionally, the outer surfaces of the upper casing 8 and the lower casing 9 may be coated with a non-conductive material if at least a part of the upper casing 8 and at least a part of the lower casing 9 are exposed to the outer surface.

An insulating member 12 for electrically insulating the upper casing 8 and the lower casing 9 is provided at the joint between the upper casing 8 and the lower casing 9. Further, a seal member 11 is provided between the upper casing 8 and the lower casing 9 to liquid-tightly join the upper casing 8 and the lower casing 9.

A first contact 4 electrically connected to the upper casing 8 and a second contact 5 electrically connected to the lower casing 9 are provided inside the battery case 2. In this embodiment, the first contact 4 is connected to the inner wall surface (lower surface) of the upper casing 8 and the second contact 5 is connected to the inner wall surface of the lower casing 9 on the front side.

A submersion detection circuit 6 is provided inside the battery case 2. The submersion detection circuit 6 is electrically connected to the first contact 4 via a lead wire 4A and is electrically connected to the second contact 5 via a lead wire 5A.

The submersion detection circuit 6 detects the electrical connection between the first contact 4 and the second contact 5 caused by the submersion of the upper casing 8 and the lower casing 9.

In the battery pack 1 with such a configuration, when the upper casing 8 and the lower casing 9 formed of a conductive material are submerged, the upper casing 8 and the lower casing 9 are electrically connected to each other through water to have the same potential and the first contact 4 and the second contact 5 are also electrically connected to each other to have the same potential. Therefore, the submersion detection circuit 6 can determine that the battery case 2 has been submerged under the condition that the first contact 4 and the second contact 5 are electrically connected.

As described above, in this embodiment, the battery case 2 includes the upper casing 8 and the lower casing 9 which are formed of a conductive material and are exposed to the outer surface and the insulating member 12 insulating the upper casing 8 and the lower casing 9 is provided between the upper casing 8 and the lower casing 9. Further, the first contact 4 electrically connected to the upper casing 8, the second contact 5 electrically connected to the lower casing 9, and the submersion detection circuit 6 detecting the electrical connection between the first contact 4 and the second contact 5 caused by the submersion of the upper casing 8 and the lower casing 9 are provided inside the battery case 2.

Accordingly, it is possible to detect the submersion of the battery case 2 without providing a submersion sensor outside the battery case 2 by detecting the electrical connection between the first contact 4 and the second contact 5 caused by the submersion of the upper casing 8 and the lower casing 9 of the battery case 2. As a result, the submersion of the battery case 2 can be detected with a simple configuration.

Further, in this embodiment, the battery case 2 includes the upper casing 8 which is the first conductive portion and the lower casing 9 which is the second conductive portion and these casings are joined to each other to form a closed space accommodating the high-voltage battery 3. Then, the insulating member 12 is provided at the joint between the upper casing 8 and the lower casing 9.

Accordingly, the first conductive portion and the second conductive portion can be respectively configured by using the upper casing 8 and the lower casing 9 generally provided in the battery case 2. Therefore, it is possible to detect the submersion of the battery case 2 with a simple configuration.

### [Second embodiment]

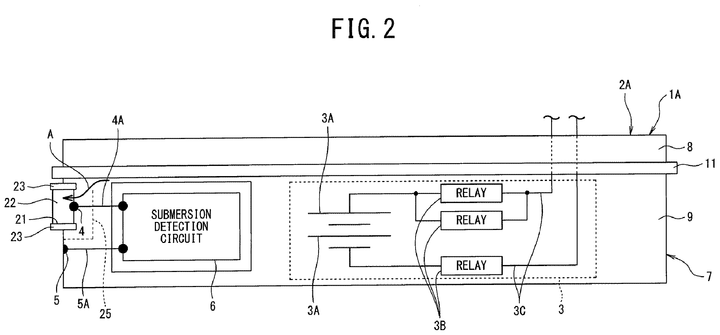

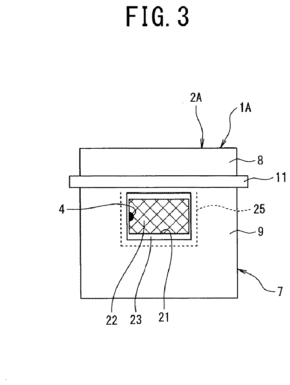

A battery pack of a vehicle according to a second embodiment of this invention will be described with reference to the drawings. Figs. 2 and 3 are views showing the battery pack according to the second embodiment of this invention. Additionally, the same members as in the first embodiment will be described with the same reference numerals as in the first embodiment.

In Figs. 2 and 3, abattery pack 1A includes the high-voltage battery 3 and abattery case 2A which accommodates the high-voltage battery 3.

The battery case 2A includes the upper casing 8 and the lower casing 9 which are joined to each other to form a closed space accommodating the high-voltage battery 3. The upper casing 8 and the lower casing 9 constitute the casing body 7 accommodating the high-voltage battery 3.

The battery case 2A includes a vent 21 which is opened to the wall surface of the casing body 7 and adjusts the inner pressure of the casing body 7 and a filter member 22 that is provided in the vent 21 and prevents dusts from entering the casing body 7 from the vent 21. The filter member 22 constitutes the first conductive portion of this invention and the casing body 7 constitutes the second conductive portion of this invention.

The filter member 22 and the casing body 7 are formed of a conductive material and are exposed to the outer surface. The seal member 11 is provided at the joint between the upper casing 8 and the lower casing 9. The vent 21 has a square shape and is disposed on the wall surface of the lower casing 9 of the casing body 7 on the front side. The filter member 22 is made of a mesh filter in which fine wires of metal such as iron are formed in a mesh shape. Additionally, in this embodiment, the vent 21 and the filter member 22 are provided on the wall surface of the lower casing 9 in the casing body 7, but the vent 21 and the filter member 22 may be provided on the wall surface of the upper casing 8 instead of the lower casing 9.

An insulating member 23 electrically insulating the filter member 22 and the casing body 7 is provided at the joint between the filter member 22 and the casing body 7.

The first contact 4 electrically connected to the filter member 22 and the second contact 5 electrically connected to the casing body 7 are provided inside the battery case 2A. In this embodiment, the first contact 4 is connected to the edge portion of the filter member 22 and the second contact 5 is connected to the inner wall surface of the lower casing 9 of the casing body 7 on the front side.

The submersion detection circuit 6 is provided inside the battery case 2A. The submersion detection circuit 6 is electrically connected to the first contact 4 via the lead wire 4A and is electrically connected to the second contact 5 via the lead wire 5A.

The submersion detection circuit 6 detects the electrical connection between the first contact 4 and the second contact 5 caused by the submersion of the filter member 22 and the casing body 7.

In the battery pack 1A with such a configuration, when the filter member 22 and the casing body 7 formed of a conductive material are submerged, the filter member 22 and the casing body 7 are electrically connected to each other through water to have the same potential and the first contact 4 and the second contact 5 are also electrically connected to each other to have the same potential. Therefore, the submersion detection circuit 6 can determine that the battery case 2A has been submerged under the condition that the first contact 4 and the second contact 5 are electrically connected.

Additionally, it is preferable that a partition wall 25 indicated by a dashed line in Figs. 2 and 3 is provided inside the casing body 7 to suppress water from entering through the vent 21. The partition wall 25 is disposed inside the vent 21 in the casing body 7 and is formed in a U-shape in the plan view or an L-shape in the side view. The partition wall 25 covers the bottom surface and the side surface of the inner space of the vent 21 and the filter member 22. Accordingly, air inside the casing body 7 passes above the partition wall 25 to reach the vent 21 and exit to the outside as indicated by an arrow A (see Fig. 2). Conversely, the air that has entered from the outside of the casing body 7 through the vent 21 can enter further inside while passing above the partition wall 25.

As described above, in this embodiment, the battery case 2A includes the filter member 22 and the casing body 7 formed of a conductive material and exposed to the outer surface and the insulating member 23 insulating the filter member 22 and the casing body 7 is provided between the filter member 22 and the casing body 7. Then, the first contact 4 electrically connected to the filter member 22, the second contact 5 electrically connected to the casing body 7, and the submersion detection circuit 6 detecting the electrical connection between the first contact 4 and the second contact 5 caused by the submersion of the filter member 22 and the casing body 7 are provided inside the battery case 2A.

Accordingly, it is possible to detect the submersion of the battery pack 1A without providing the submersion sensor outside the battery case 2A by detecting the electrical connection between the first contact 4 and the second contact 5 caused by the submersion of the casing body 7 and the filter member 22 of the battery case 2A. As a result, it is possible to detect the submersion of the battery case 2A with a simple configuration.

Further, in this embodiment, the battery case 2A includes the casing body 7 which is the second conductive portion accommodating the high-voltage battery 3, the vent 21 which is opened to the wall surface of the casing body 7 and adjusts the inner pressure of the casing body 7, and the filter member 22 that is provided in the vent 21 and is the first conductive portion preventing dust from entering the casing body 7 from the vent 21. Then, the insulating member 23 is provided at the joint between the filter member 22 and the casing body 7.

Accordingly, the first conductive portion and the second conductive portion can be respectively configured by using the casing body 7 and the vent 21 which are the members generally provided in the battery case 2A. Therefore, it is possible to detect the submersion of the battery case 2A with a simple configuration.

While embodiments of this invention have been described, it is apparent that some artisan could have made changes without departing from the scope of this invention. It is intended that any and all such modifications are involved in the appended claims.

### (DESCRIPTION OF REFERENCE NUMERALS)

1, 1A ... Battery pack, 2, 2A ... Battery case, 3 ... High-voltage battery (battery), 4 ... First contact, 5 ... Second contact, 6 ... Submersion detection circuit, 7 ... Casing body (second conductive portion), 8 ... Upper casing (first conductive portion, first casing), 9 ... Lower casing (second conductive portion, second casing), 12, 23 ... Insulating member, 21 ... Vent, 22 ... Filter member (first conductive portion)

## Claims

1. A battery pack (1, 1A) comprising:
a battery (3); and
a battery case (2, 2A) accommodating the battery (3),
wherein the battery case (2, 2A) includes a first conductive portion (8, 22) and a second conductive portion (7, 9) formed of a conductive material and exposed to an outer surface,
wherein an insulating member (12, 23) insulating the first conductive portion (8, 22) and the second conductive portion (7, 9) is provided between the first conductive portion (8, 22) and the second conductive portion (7, 9), and
wherein a first contact (4) electrically connected to the first conductive portion (8, 22), a second contact (5) electrically connected to the second conductive portion (7, 9), and a submersion detection circuit (6) detecting an electrical connection between the first contact (4) and the second contact (5) caused by the submersion of the first conductive portion (8, 22) and the second conductive portion (7, 9) are provided inside the battery case (2, 2A).

2. The battery pack according to claim 1,
wherein the battery case (2, 2A) includes a first casing (8) and a second casing (9) joined to each other to form a closed space accommodating the battery (3),
wherein the first casing (8) constitutes the first conductive portion,
wherein the second casing (9) constitutes the second conductive portion, and
wherein the insulating member (12) is provided at the joint between the first casing (8) and the second casing (9).

3. The battery pack according to claim 1,
wherein the battery case (2, 2A) includes a casing body (7) accommodating the battery (3), a vent (21) opened to a wall surface of the casing body (7) and adjusting an inner pressure of the casing body (7), and a filter member (22) provided in the vent (21) and preventing dust from entering the casing body (7) from the vent (21),
wherein the filter member (22) constitutes the first conductive portion,
wherein the casing body (7) constitutes the second conductive portion, and
wherein the insulating member (23) is provided at the joint between the filter member (22) and the casing body (7).

## Patentansprüche

1. Batteriepack (1, 1 A) umfassend:
eine Batterie (3); und
ein Batteriegehäuse (2, 2A), in welchem die Batterie (3) aufgenommen ist,
wobei das Batteriegehäuse (2, 2A) einen ersten leitfähigen Abschnitt (8, 22) und einen zweiten leitfähigen Abschnitt (7, 9) umfasst, welche aus einem leitfähigen Material gebildet sind und an einer äußeren Fläche freiliegen,
wobei ein Isolationselement (12, 23), welches den ersten leitfähigen Abschnitt (8, 22) und den zweiten leitfähigen Abschnitt (7, 9) isoliert, zwischen dem ersten leitfähigen Abschnitt (8, 22) und dem zweiten leitfähigen Abschnitt (7, 9) bereitgestellt ist, und
wobei ein erster Kontakt (4), welcher elektrisch mit dem ersten leitfähigen Abschnitt (8, 22) verbunden ist, ein zweiter Kontakt (5), welcher elektrisch mit dem zweiten leitfähigen Abschnitt (7, 9) verbunden ist, und ein Untertauch-Detektions-Schaltkreis (6) innerhalb des Batteriegehäuses (2, 2A) bereitgestellt sind, welcher eine elektrische Verbindung zwischen dem ersten Kontakt (4) und dem zweiten Kontakt (5) detektiert, welcher durch das Untertauchen des ersten leitfähigen Abschnitts (8, 22) und des zweiten leitfähigen Abschnitts (7, 9) hervorgerufen ist.

2. Batteriepack nach Anspruch 1,
wobei das Batteriegehäuse (2, 2A) eine erste Hülle (8) und eine zweite Hülle (9) umfasst, welche miteinander verbunden sind, um einen geschlossenen Raum zu bilden, in welchem die Batterie (3) aufgenommen ist;
wobei die erste Hülle (8) den ersten leitfähigen Abschnitt darstellt,
wobei die zweite Hülle (9) den zweiten leitfähigen Abschnitt darstellt, und
wobei das Isolationselement (12) an der Verbindung zwischen der ersten Hülle (8) und der zweiten Hülle (9) bereitgestellt ist.

3. Batteriepack nach Anspruch 1,
wobei das Batteriegehäuse (2, 2A) einen Hüllkörper (7), in welchem die Batterie (3) aufgenommen ist, ein Ventil (21), welches zu einer Wandfläche des Hüllkörpers (7) geöffnet ist und einen inneren Druck des Hüllkörpers (7) anpasst, und ein Filterelement (22) umfasst, welches in dem Ventil (21) bereitgestellt ist und Staub davon abhält, in den Hüllkörper (7) von dem Ventil (21) einzudringen,
wobei das Filterelement (22) den ersten leitfähigen Abschnitt darstellt,
wobei der Hüllkörper (7) den zweiten leitfähigen Abschnitt darstellt, und
wobei das Isolationselement (23) an der Verbindung zwischen dem Filterelement (22) und dem Hüllkörper (7) bereitgestellt ist.

## Revendications

1. Bloc-batterie (1, 1A) comprenant :
une batterie (3) ; et
un boîtier de batterie (2, 2A) logeant la batterie (3),
dans lequel le boîtier de batterie (2, 2A) comporte une première partie conductrice (8, 22) et une deuxième partie conductrice (7, 9) formées d'un matériau conducteur et exposées à une surface externe,
dans lequel un élément d'isolation (12, 23) isolant la première partie conductrice (8, 22) et la deuxième partie conductrice (7, 9) est disposé entre la première partie conductrice (8, 22) et la deuxième partie conductrice (7, 9), et
dans lequel un premier contact (4) électriquement connecté à la première partie conductrice (8, 22), un deuxième contact (5) électriquement connecté à la deuxième partie conductrice (7, 9) et un circuit de détection d'immersion (6) détectant une connexion électrique entre le premier contact (4) et le deuxième contact (5) provoquée par l'immersion de la première partie conductrice (8, 22) et de la deuxième partie conductrice (7, 9) sont disposés à l'intérieur du boîtier de batterie (2, 2A).

2. Bloc-batterie selon la revendication 1,
dans lequel le boîtier de batterie (2, 2A) comporte un premier carter (8) et un deuxième carter (9) assemblés l'un à l'autre pour former un espace clos logeant la batterie (3),
dans lequel le premier carter (8) constitue la première partie conductrice,
dans lequel le deuxième carter (9) constitue la deuxième partie conductrice, et
dans lequel l'élément d'isolation (12) est disposé au niveau de la jonction entre le premier carter (8) et le deuxième carter (9).

3. Bloc-batterie selon la revendication 1,
dans lequel le boîtier de batterie (2, 2A) comporte un corps de carter (7) logeant la batterie (3), un évent (21) ouvert sur une surface de paroi du corps de carter (7) et ajustant une pression interne du corps de carter (7), et un élément filtrant (22) disposé dans l'évent (21) et empêchant la poussière d'entrer dans le corps de carter (7) à partir de l'évent (21),
dans lequel l'élément filtrant (22) constitue la première partie conductrice,
dans lequel le corps de carter (7) constitue la deuxième partie conductrice, et
dans lequel l'élément d'isolation (23) est disposé au niveau de la jonction entre l'élément filtrant (22) et le corps de carter (7).
